(19) Europäisches Patentamt
European Patent Office
Office européen des brevets

(11) Veröffentlichungsnummer: **0 364 399**
**A2**

(12) **EUROPÄISCHE PATENTANMELDUNG**

(21) Anmeldenummer: **89810730.5**

(22) Anmeldetag: **26.09.89**

(51) Int. Cl.5: **C08F 226/00 , C08F 218/04 , D06P 1/52 , //(C08F226/00, 220:54),(C08F218/04,220:54)**

(30) Priorität: **03.10.88 CH 3665/88**
**06.07.89 CH 2508/89**

(43) Veröffentlichungstag der Anmeldung:
**18.04.90 Patentblatt 90/16**

(84) Benannte Vertragsstaaten:
**AT BE CH DE ES FR GB IT LI NL**

(71) Anmelder: **CIBA-GEIGY AG**
**Klybeckstrasse 141**
**CH-4002 Basel(CH)**

(72) Erfinder: **Berendt, Hans-Ulrich**
**Langgartenweg 25**
**CH-4123 Allschwil(CH)**

(54) **Wasserlösliche oder in Wasser dispergierbare Mischpolymerisate, deren Herstellung und Verwendung.**

(57) Mischpolymerisate, welche aus

(1) 20 bis 50 Gew.% eines gegebenenfalls N-substituierten Acrylamid oder Methacrylamid und

(2) 50 bis 80 Gew.% eines N-vinylsubstituierten Amids oder eines Vinylesters jeweils einer gesättigten aliphatischen Monocarbonsäure, wobei sich die Summe von (1) und (2) zu 100 % ergänzt, erhältlich sind.

Diese neuen Mischpolymerisate eignen sich als Färbereihilfsmittel, besonders als Foulardierhilfsmittel oder Flottenbindemittel beim Färben von Cellulosefasermaterialien.

EP 0 364 399 A2

## Wasserlösliche oder in Wasser dispergierbare Mischpolymerisate, deren Herstellung und Verwendung

Die vorliegende Anmeldung betrifft neue wasserlösliche oder in Wasser dispergierbare Mischpolymerisate, Verfahren zu ihrer Herstellung und ihre mannigfache Verwendung z.B. als Färbereihilfsmittel wie Foulardierhilfsmittel oder Flottenbindemittel, als Textilhilfsmittel z.B. im Schaumdruckverfahren.

Die neuen Mischpolymerisate sind dadurch gekennzeichnet, dass sie aus

(1) 20 bis 50 Gew.% eines gegebenenfalls N-substituierten Acrylamid oder Methacrylamid und

(2) 50 bis 80 Gew.% eines N-vinylsubstituierten Amids oder eines Vinylesters jeweils einer gesättigten aliphatischen Monocarbonsäure, wobei sich die Summen von (1) und (2) zu 100 % ergänzt, erhältlich sind.

Beispiele für erfindungsgemäss verwendete Monomere (1) sind Acrylamid oder Methacrylamid, die z.B. jeweils durch $C_1$-$C_5$-Alkylreste, $C_2$-$C_4$-Hydroxyalkylgruppen, $C_2$-$C_4$-Alkoxyalkylgruppen, Di-$C_1$-$C_4$-alkylamino-$C_1$-$C_5$-alkylgruppen oder durch Acetyl oder Acetyl-$C_1$-$C_5$-alkyl oder durch $-CH_2CONH_2$ oder

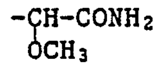

N-substituiert sein können, wie z.B. N-Methylacrylamid, N,N-Dimethylacrylamid, N-Methoxymethylacrylamid, N-$\beta$-Hydroxyethylacrylamid, N-Diacetonacrylamid, N-Acetylacrylamid, N-Acryloylamidoessigsäureamid (Acryloylglycin) oder N-Acryloylamidomethoxyessigsäureamid sowie auch N,N-di-$\beta$-hydroxyethylacrylamid, Mannichbasen des Acrylsäure-und Methacrylsäureamids, wie z.B. N-Di($C_1$-$C_4$-alkylamino)methyl-acrylamide und weitere N-alkylsubstituierte Acrylamide oder Methacrylamide, die am Alkylrest eine tertiäre Aminogruppe tragen, wie z.B. Dimethylaminopropyl acrylamid, Diethylaminopropylacrylamid, Dimethylaminopropylmethacrylamid, Dimethylamino-2,2-dimethylpropylacrylamid oder -methacrylamid. Es können auch Mischungen der Acrylamidmonomere (1) verwendet werden. Besonders bevorzugte Acrylamidmonomere (1) sind Methacrylamid oder vorallem Acrylamid.

Zu den erfindungsgemäss mitzuverwendenden Vinylverbindungen (2) gehören insbesondere N-vinylsubstituierte Amide aliphatischer gesättigter Monocarbonsäuren mit 1 bis 4 Kohlenstoffatomen, wie z.B. N-Vinylformamid, N-Vinyl-N-methyl-formamid, N-Vinylacetamid, N-Methyl-N-vinylacetamid, N-Ethyl-N-vinylacetamid. Weiter werden unter Vinylverbindungen (2) Vinylester aliphatischer gesättigter Monocarbonsäuren mit 1 bis 4 Kohlenstoffatomen, wie z.B. Vinylacetat, Vinylpropionat oder Vinylbutyrat verstanden.

Das Monomerengemisch besteht insbesondere aus 25 bis 48 Gew.% der Acrylamidverbindung (1) und 52 bis 75 Gew.% der Vinylverbindung (2). Die Summe der Komponenten (1) und (2) beträgt 100 %.

Unter diesen Produkten werden solche bevorzugt, die 35 bis 48 Gew.% Acrylamid und 52 bis 65 Gew.% N-Methyl-N-vinylacetamid, wobei die Summe der umgesetzten Komponenten 100 % beträgt, enthalten. Die angegebenen Prozentsätze beziehen sich auf das gesamte Mischpolymerisat.

Die Herstellung der erfindungsgemäss verwendeten Mischpolymerisate erfolgt nach an sich bekannten Methoden, zweckmässig in der Weise, dass man das Monomerengemisch aus (1) und (2) in Gegenwart von Initiatoren zweckmässig bei einer Temperatur von 40 bis 100 °C polymerisiert.

Als Initiatoren werden zweckmässigerweise freie Radikale bildende organische oder anorganische Verbindungen verwendet. Geeignete organische Initiatoren zur Durchführung der radikalischen Polymerisation sind z.B. Azoamide, wie z.B. Azo-bis-2-methyl-(1,1-dimethyl-2-hydroxyethyl)propionamid, 2,2′-Azo-bis-(2-methyl-propiohydroxaminsäure), 2,2′-Azo-bis-2-[N-phenylamidino]-propan-dihydrochlorid, 2,2′-Azo-bis-2-methylpropionsäurehydrazid, 2,2′-Azo-bis-N,N-dimethylenisobutylamidin oder besonders 2,2′-Azo-bis-(2-amidinopropan)-dihydrochlorid. Geeignete anorganische Initiatoren sind Wasserstoffsuperoxid, Perborate, Percarbonate, wie z.B. Natriumpercarbonat, Persulfate, Peroxidisulfate, wie z.B. Kaliumperoxiddisulfat sowie aus der einschlägigen Literatur bekannte Redox-Systeme.

Diese Katalysatoren können in Mengen von 0,05 bis 2 Gew.% vorteilhafterweise 0,05 bis 1 Gew.% und vorzugweise 0,1 bis 0,5 Gew.%, bezogen auf die Ausgangsprodukte eingesetzt werden.

Die Mischpolymerisation wird vorteilhafterweise in inerter Atmosphäre z.B. in Gegenwart von Stickstoff durchgeführt.

Die Mischpolymerisate fallen als sehr viskose Masse an. Durch Lösen und Verdünnen mit Wasser kann man gelartige Produkte mit einem Trockengehalt von z.B. 0,1 bis 20 Gew.%, vorzugsweise 2 bis 10 Gew.% herstellen. Zur Konservierung und/oder Verbesserung der Lagerstabilität der erhaltenen wässerigen Mischpolymerisatlösungen können Konservierungsmittel, wie z.B. Chloracetamid, N-Hydroxymethylchloracetamid, Pentachlorphenolate, Alkalimetallnitrite, Triethanolamin oder Hydrochinonmonomethylether oder auch antibakterielle Mittel, wie z.B. Natriumazid oder oberflächenaktive quaternäre Ammoniumverbindungen, die einen oder zwei Fettalkylreste aufweisen, zugesetzt werden. Vorteilhafterweise können auch Mischungen dieser Konservierungsmittel und keimtötenden Verbindungen eingesetzt werden.

Die besonders bevorzugten 2-10 Gew.%igen Lösungen der erhaltenen Mischpolymerisate zeigen nicht idealviskoses, sondern pseudoplastisches Fliessverhalten. Sie haben, je nach Schergeschwindigkeit, bei 20° C eine dynamische Viskosität zwischen 100 und 100'000, vorzugsweise 1000 bis 50'000 und insbesondere 1000 bis 20'000 mPa•s (milli Pascal Sekunde).

Die neuen Mischpolymerisate werden insbesondere als Färbereihilfsmittel beim kontinuierlichen oder halbkontinuierlichen Färben (oder Bedrucken) von cellulosehaltigem Textilgut verwendet.

Gegenstand der vorliegenden Erfindung ist demnach auch ein Verfahren zum Färben von Textilmaterialien, die ganz oder teilweise aus Cellulosefasern bestehen mit substantiven Farbstoffen oder vorzugsweise mit Reaktivfarb stoffen, welches Verfahren dadurch gekennzeichnet ist, dass man die Textilmaterialien mit einer wässerigen Flotte, die ausser den Farbstoffen erfindungsgemässe Mischpolymerisate enthält, imprägniert und anschliessend die Fixierung der Farbstoffe durch Hitzeeinwirkung oder nach dem Kaltverweilverfahren durchführt.

Die Einsatzmengen, in denen die Mischpolymerisate zu den Färbeflotten zugesetzt werden, können in weiten Grenzen schwanken. So haben sich Mengen von 2 bis 40 g, vorzugsweise 5 bis 20 g in Form von 3 bis 10 % wässrigen Lösungen, je Liter Färbeflotte vorteilhaft erwiesen.

Die erfindungsgemässen Mischpolymerisate eignen sich insbesondere für das kontinuierliche oder halbkontinuierliche Färben von Textilien, die aus Cellulose bestehen oder diese enthalten, mit substantiven Farbstoffen oder vorzugsweise Reaktivfarbstoffen, wobei die Cellulosematerialien nach der Imprägnierung einem Hitzebehandlungsprozess unterworfen werden können, um die applizierten Farbstoffe zu fixieren. Vorzugsweise erfolgt die Fixierung der Farbstoffe nach der Kaltverweilmethode.

Als Cellulosefasermaterial kommt solches aus regenerierter oder insbesondere natürlicher Cellulose in Betracht, wie z.B. Zellwolle, Viskoseseide, Hanf, Leinen, Jute oder vorzugsweise Baumwolle, sowie Fasermischungen z.B. solche aus Polyamid/Baumwolle oder insbesondere aus Polyester/Baumwolle, wobei der Polyesteranteil mit Dispersionsfarbstoffen vor-, gleichzeitig oder nachgefärbt werden kann.

Das Textilgut ist in jeglicher Form anwendbar, wie z.B. Garne, Garnstränge, Gewebe, Gewirke, Filze, vorzugsweise in Form von textilen Flächengebilden, wie Gewebe, Maschenware oder Teppich, die ganz oder teilweise aus nativer, regenerierter oder modifizierter Cellulose bestehen. Es kann sowohl rohe als auch vorbehandelte Ware verwendet werden.

Als Substantivfarbstoffe sind die üblichen Direktfarbstoffe geeignet, beispielsweise die in Colour Index, 3. Auflage (1971) Band 2 auf den Seiten 2005-2478 genannten "Direct Dyes".

Unter Reaktivfarbstoffen werden die üblichen Farbstoffe verstanden, welche mit der Cellulose eine chemische Bindung eingehen, z.B. die in Colour Index, in Band 3 (3. Auflage, 1971) auf den Seiten 3391-3560 und in Band 6 (revidierte 3. Auflage, 1975) auf den Seiten 6268-6345 aufgeführten "Reactive Dyes". Küpenfarbstoffe können auch verwendet werden.

Die Menge der Farbstoffe richtet sich in der Regel nach der gewünschten Farbstärke und beträgt zweckmässig 0,1 bis 80 g pro Liter Flotte, vorzugsweise 2 bis 50 g/l Flotte.

Bei Verwendung von Reaktivfarbstoffen enthalten die Zubereitungen in der Regel Fixieralkalien.

Als alkalisch reagierende Verbindungen zur Fixierung der Reaktivfarbstoffe werden beispielsweise Natriumcarbonat, Natriumbicarbonat, Natriumhydroxid, Dinatriumphosphat, Trinatriumphosphat, Borax, wässeriges Ammoniak oder Alkalispender, wie z.B. Natriumtrichloracetat eingesetzt. Als Alkali hat sich insbesondere eine Mischung aus Wasserglas und einer 30%-igen wässerigen Natriumhydroxidlösung sehr gut bewährt.

Der pH-Wert der Alkali enthaltenden Färbeflotten beträgt in der Regel 7,5 bis 13,2 vorzugsweise 8,5 bis 11,5.

Die Färbeflotten werden zweckmässigerweise durch Lösen des Farbstoffes und durch Zusatz der erfindungsgemässen Mischpolymerisate und gegebenenfalls von Alkali vorbereitet. Je nach dem verwendeten Farbstoff können die Färbeflotten weitere übliche Zusätze enthalten, z.B. Elektrolyte, wie z.B. Natriumchlorid oder Natriumsulfat sowie auch Sequestrierungsmittel, Reduktionsschutzmittel, wie z.B. Nitrobenzolsulfonsäure-Natriumsalz ferner Harnstoff, Glycerin und/oder Natriumformiat. Gegebenenfalls können auch Verdickungsmittel, wie z.B. Alginate, Cellulosederivate, Stärkeether oder Kernmehlether wie Johannisbrotkernmehlether darin enthalten sein.

Die Imprägnierung des cellulosehaltigen Textilgutes kann durch Auftragen, Besprühen oder vorzugsweise durch Klotzen der Färbeflotte erfolgen.

Nach der Imprägnierung werden die Farbstoffe durch Hitzeeinwirkung oder vorzugsweise nach der Kalt-Verweilmethode fixiert.

Die Thermofixierstufe kann durch ein Dämpfverfahren, ein Warmverweilverfahren, einen Thermosolierprozess oder durch eine Mikrowellenbehandlung durchgeführt werden.

Beim Dämpfverfahren werden die mit der Färbeflotte imprägnierten Textilmaterialien zur Fixierung der Farbstoffe einer Behandlung in einem Dämpfer mit gegebenenfalls überhitzten Dampf, zweckmässigerweise bei einer Temperatur von 98 bis 210 °C, vorteilhafterweise 100 bis 180 °C und vorzugsweise 102 bis 120 °C unterzogen.

Beim Warmverweilverfahren lässt man die imprägnierte Ware im feuchten Zustand z.B. 1 bis 120 Minuten lang, vorteilhafterweise bei Temperaturen von 85 bis 102 °C verweilen. Hierbei kann die benetzte Ware durch eine Infrarot-Behandlung auf 85 bis 102 °C vorgeheizt werden. Bevorzugt beträgt die Verweiltemperatur 95 bis 100 °C.

Die Fixierung der Farbstoffe durch den sogenannten Thermosolierprozess kann nach einer oder ohne Zwischentrocknung z.B. bei einer Temperatur von 100 bis 210 °C erfolgen. Vorzugsweise erfolgt die Thermosolierung bei einer Temperatur von 120 bis 220 °C, vorzugsweise 140 bis 180 °C und nach einer Zwischentrocknung bei 80 bis 120 °C der imprägnierten Ware. Je nach der Temperatur kann die Thermosolierung 20 Sekunden bis 5 Minuten, vorzugsweise 30 bis 60 Sekunden dauern.

Die Thermofixierung der Farbstoffe kann auch mittels Mikrowellen durchgeführt werden. Hierbei wird die Ware nach Imprägnierung mit der Färbeflotte, kontinuierlich oder diskontinuierlich und in einer Kammer mittels Mikrowellen behandelt.

Die Mikrowellenbehandlung kann 5 Sekunden bis 120 Minuten dauern. Vorzugsweise reichen 30 Sekunden bis 5 Minuten aus. Als Mikrowellen bezeichnet man elektromagnetische Wellen (Radiowellen) im Frequenzbereich von 300 bis 100'000 MHz, vorzugsweise 1000 bis 30'000 MHz (méga hertz).

Die Fixierung der Farbstoffe gemäss dem Kaltverweilverfahren erfolgt zweckmässigerweise durch Lagerung der imprägnierten und vorzugsweise abgetafelten oder aufgerollten Ware bei Raumtemperatur (15 bis 30 °C) z.B. während 3 bis 24 Stunden, wobei die Kaltverweilzeit bekanntlich Farbstoff abhängig ist. Gegebenenfalls kann auch bei leicht erhöhter Temperatur (30 bis 80 °C) gelagert werden.

Im Anschluss an den Färbeprozess kann man das gefärbte Cellulosematerial in üblicher Weise auswaschen, um nichtfixierten Farbstoff zu entfernen. Man behandelt dazu das Substrat beispielsweise bei 40 °C bis Kochtemperatur in einer Lösung, die Seife oder synthetisches Waschmittel enthält. Anschliessend kann zur Verbesserung der Nassechtheiten eine Behandlung mit einem Fixiermittel erfolgen.

Man erhält mit dem erfindungsgemässen Verfahren egale und farbkräftige Färbungen, die sich durch ein ruhiges Warenbild auszeichnen. Desweiteren werden die Gebrauchsechtheiten der gefärbten Ware, wie z.B. Lichtechtheit, Reibechtheit und Nassechtheiten durch den Einsatz des definierten Mischpolymerisates nicht negativ beeinflusst. Insbesondere kann eine hervorragende Durchfärbung der Ware auf Rohware erreicht werden.

Die erfindungsgemässen Mischpolymerisate eignen sich auch beim Färben oder Bedrucken von cellulosehaltigem Textilgut mit Reaktivfarbstoffen oder Küpenfarbstoffen mit Hilfe von Schaum, wobei sie wesentlich zur Standschärfe beitragen und zudem unter Ausschluss der üblichen Verdicker, insbesondere Alginate gearbeitet werden kann.

In den folgenden Beispielen beziehen sich die Prozentansätze, wenn nichts anderes angegeben ist, auf das Gewicht. Die Mengen beziehen sich bei den Farbstoffen auf handelsübliche, d.h. coupierte Ware und bei den Hilfsmitteln auf Reinsubstanz.

## Herstellungsbeispiele

### Beispiel 1:

Eine Lösung von 34,12 g Acrylamid, 51,55 g N-Vinyl-N-methylacetamid und 0,09 g 2,2′-Azobis-(2-amidinopropan)-hydrochlorid in 300 g Wasser wird vorgelegt und unter Rühren und nach Ueberleiten von Stickstoff im Verlaufe von 10 Minuten auf 65 °C aufgeheizt. Nach weiteren 10 Minuten nimmt die Viskosität des Ansatzes schnell zu. Man lässt zu einer Viskosität polymerisieren, bei der sich das Mischpolymerisat am Rührer aufzuwickeln beginnt. Man verdünnt mit insgesamt 1042,2 g Wasser im Verlaufe von 45 Minuten, worauf die Reaktionsmasse stark aufgequollen vorliegt. Man rührt anschliessend 1 Stunde bei 60 °C aus und lässt unter Rühren auf Raumtemperatur kommen. Zur vollständigen Homogenisierung wird noch 4 Stunden nachgerührt. Man fügt 0,01 g Chloracetamid zu und erhält 1427,9 g einer völlig klaren, hochviskosen Masse mit einem Polymerengehalt von 6 Gew.%.

Das Produkt zeigt pseudoplastisches Verhalten. Dynamische Viskosität einer 1,5%igen Lösungs in

mPa•s bei 20°C als Funktion der Mess-Schergeschwindigkeit D.
Gerät: Rheomat RM 15,MS 45
Dynamische Viskosität $\eta$ (mPa•s):
429 396 357 316 279 233 200 175 152 131 107
Schergeschwindigkeit D ($s^{-1}$)
8,35 11,1 14,3 19,0 24,9 35,3 47,1 61,5 81,1 106 153

Beispiel 2:

Eine Lösung von 34,5 g Acrylamid, 44,3 g N-Methyl-N-Vinylacetamid und 0,09 g 2,2′-Azobis-(2-amidinopropan)-hydrochlorid in 300 g Wasser wird vorgelegt und unter Rühren und Ueberleiten von Stickstoff im Verlaufe von 10 Minuten auf 65°C aufgeheizt. Nach weiteren 20 Minuten nimmt die Viskosität der Lösung schnell zu. Man verdünnt während 1 1/2 Stunden durch Zutropfen von 933,8 g Wasser; nach der Wasserzugabe wird 1 Stunde bei 60°C ausgerührt und dann weitere 12 Stunden zur Homogenisierung nachgerührt. Man fügt 0,01 g Chloracetamid zu und kühlt unter Rühren auf Raumtemperatur ab. Man erhält 1312,6 g einer leicht opaken Lösung mit einem Polymergehalt von 6 Gew.%.

Das Produkt zeigt pseudoplastisches Verhalten. Dynamische Viskosität einer 1,5%igen Lösungs in mPa•s bei 20°C als Funktion der Mess-Schergeschwindigkeit D.
Gerät: Rheomat RM 15,MS 45
Schergeschwindigkeit D ($s^{-1}$)
8,35 11,1 14,3 19,0 24,9 35,3 47,1 61,5 81,1 106
Dynamische Viskosität $\eta$ (mPa•s):
464 429 387 343 304 256 222 196 170 148

Beispiel 3:

Eine Lösung von 34,5 g Acrylamid, 46,2 g N-Methyl-N-Vinylacetamid 0,09 g 2,2′-Azobis-(2-amidinopropan)-hydrochlorid in 300 g Wasser wird vorgelegt und unter Rühren und Ueberleiten von Stickstoff im Verlaufe von 10 Minuten auf 60°C aufgeheizt. Nach weiteren 25 Minuten nimmt die Viskosität der Lösung schnell zu. Man verdünnt während 1 1/2 Stunden durch Zutropfen von 1131,5 g Wasser; nach der Wasserzugabe wird 1 Stunde bei 60°C ausgerührt und dann weitere 12 Stunden zur Homogenisierung nachgerührt. Man fügt 0,01 g Chloracetamid zu und kühlt unter Rühren auf Raumtemperatur ab. Man erhält 1522,9 g einer leicht opaken Lösung mit einem Polymergehalt von 6 Gew.%.

Das Produkt zeigt pseudoplastisches Verhalten. Dynamische Viskosität einer 1,5%igen Lösungs in mPa•s bei 20°C als Funktion der Mess-Schergeschwindigkeit D.
Gerät: Rheomat RM 15,MS 45
Schergeschwindigkeit D ($s^{-1}$)
8,35 11,1 14,3 19,0 24,9 35,3 47,1 61,5 81,1 106 153
Dynamische Viskosität $\eta$ (mPa•s):
407 380 344 306 273 230 200 176 154 134 111

Beispiel 4:

Eine Lösung von 34,12 g Acrylamid, 53,45 g N-Methyl-N-Vinylacetamid und 0,09 g 2,2′-Azobis-(2-amidinopropan)-hydrochlorid in 300 g Wasser wird vorgelegt und unter Rühren und Ueberleiten von Stickstoff im Verlaufe von 10 Minuten auf 60°C aufgeheizt. Nach weiteren 60 Minuten nimmt die Viskosität der Lösung schnell zu. Man verdünnt während 1 1/2 Stunden durch Zutropfen von 1071,9 g Wasser; nach der Wasserzugabe wird 1 Stunde bei 60°C ausgerührt und dann weitere 12 Stunden zur Homogenisierung nachgerührt. Man fügt 0,01 g Chloracetamid zu und kühlt unter Rühren auf Raumtemperatur ab. Man erhält 1459,5 g einer leicht opaken Lösung mit einem Polymergehalt von 6 Gew.%.

Das Produkt zeigt pseudoplastisches Verhalten. Dynamische Viskosität einer 1,5%igen Lösungs in mPa•s bei 20°C als Funktion der Mess-Schergeschwindigkeit D.
Gerät: Rheomat RM 15,MS 45
Schergeschwindigkeit D ($s^{-1}$)
8,35 11,1 14,3 19,0 24,9 35,3 47,1 61,5 81,1 106 153

Dynamische Viskosität η (mPa•s):
196 192 180 169 158 142 129 119 107 96 83

Auf gleiche Art und Weise wie in den Beispielen 1 bis 4 beschrieben werden folgende Mischpolymerisate in Form von 6%igen wässerigen Lösungen hergestellt. Dynamische Viskosität einer 1,5%igen Lösung in mP•s bei 20° C als Funktion der Mess-Schergeschwindigkeit D ($s^{-1}$).
Gerät: Rheomat RM 15,MS 45

Beispiel 5:

Mischpolymerisat bestehend aus
49,1 % N,N-Dimethylacrylamid
50,9 % N-Vinyl-N-methylacetamid
Schergeschwindigkeit D ($s^{-1}$)
8,35 11,1 14,3 19,0 24,9 35,3 47,1 61,5 81,1 106 153
Dynamische Viskosität η (mPa•s):
83,0 80,7 78,1 75,6 74,2 70,8 67,5 64,5 61,1 57,5 52,2

Beispiel 6:

Mischpolymerisat bestehend aus
44,76 % Dimethylaminopropyl-methacrylamid
55,24 % N-Vinyl-N-methylacetamid
Schergeschwindigkeit D ($s^{-1}$)
8,35 11,1 14,3 19,0 24,9 35,3 47,1 61,5 81,1 106 153
Dynamische Viskosität η (mPa•s):
276 268 271 266 263 261 255 247 240 227 213

Beispiel 7:

Mischpolymerisat bestehend aus
49,37 % Acrylamid
50,63 % Vinylacetat
Schergeschwindigkeit D ($s^{-1}$)
14,3 19,0 24,9 35,3 47,1 61,5 81,1 106 153
Dynamische Viskosität η (mPa•s):
46,3 44,9 42,5 40,4 38,1 36,3 34,4 32,3 29,8

Beispiel 8:

Mischpolymerisat aus
32,5 % Acrylamid
10 % Methacrylamid
57,5 % N-Vinyl-N-methylacetamid
Schergeschwindigkeit D ($s^{-1}$)
35,3 47,1 61,5 81,1 106 106 153
Dynamische Viskosität η (mPa•s):
19,3 18,9 18,7 18,4 18,4 18,2

Beispiel 9:

Mischpolymerisat aus
42,5 % Acrylamid
6 % Diacetonacrylamid
51,5 % N-Vinyl-N-methylacetamid
Schergeschwindigkeit D ($s^{-1}$)
8,35 11,1 14,3 19,0 24,9 35,3 47,1 61,5 81,1 106 153
Dynamische Viskosität η (mPa•s):

305 291 269 244 221 192 169 152 135 119 108

Beispiel 10:

Mischpolymerisat aus
37,5 % Acrylamid
10 % N-Methoxymethylacrylamid
52,5 % N-Vinyl-N-methylacetamid
Schergeschwindigkeit D ($s^{-1}$)
19,0 24,9 35,3 47,1 61,5 81,1 106 153
Dynamische Viskosität $\eta$ (mPa•s):
33,5 33,1 32,1 30,9 30,7 30,4 29,8 29,0

Beispiel 11:

Mischpolymerisat bestehend aus
47,5 % N-Methylacrylamid
52,5 % N-Vinyl-N-methylacetamid
Schergeschwindigkeit D ($s^{-1}$)
8,35 11,1 14,3 19,0 24,9 35,3 47,1 61,5 81,1 106 153
Dynamische Viskosität $\eta$ (mPa•s):
72,5 71,7 69,4 66,6 64,8 60,7 57,8 55,0 52,0 48,7 44,5

Beispiel 12:

Mischpolymerisat aus
37,5 % Acrylamid
10 % N,N-Dimethylacrylamid
52,5 % N-Vinyl-N-methylacetamid
Schergeschwindigkeit D ($s^{-1}$)
8,35 11,1 14,3 19,0 24,9 35,3 47,1 61,5 81,1 106
Dynamische Viskosität $\eta$ (mPa•s):
411 381 345 308 275 233 203 181 159 139

Beispiel 13:

Mischpolymerisat aus
27,5 % Acrylamid
18 % N-Methylacrylamid
54,5 % N-Vinyl-N-methylacetamid
Schergeschwindigkeit D ($s^{-1}$)
8,35 11,1 14,3 19,0 24,9 35,3 47,1 61,5 81,1 106 153
Dynamische Viskosität $\eta$ (mPa•s):
181 178 168 155 145 130 117 107 96,4 86,3 74,8

Beispiel 14:

Mischpolymerisat aus
15 % Methylacrylamid
27,5 % Diacetonacrylamid
57,5 % N-Vinyl-N-methylacetamid
Schergeschwindigkeit D ($s^{-1}$)
8,35 11,1 14,3 19,0 24,9 35,3 47,1 61,5 81,1 106 153
Dynamische Viskosität $\eta$ (mPa•s):
73,5 75,0 71,9 68,5 65,5 61,7 58,3 55,0 51,7 48,0 43,5

Anwendungsbeispiele

Beispiel 15:

Ein rohes Baumwollgewirke (165 g/m²) wird auf einem Foulard mit einer wässrigen Flotte, die im Liter 50 g des Farbstoffes der Formel

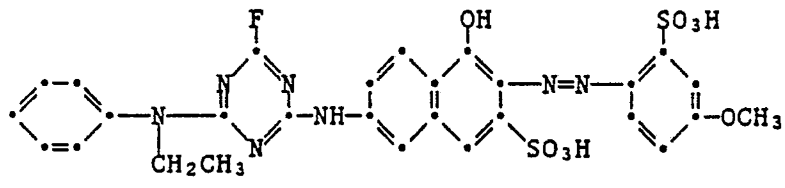

(11)

3,0 g eines Netzmittels bestehend aus Pentadekan-1-sulfonsäure-Natriumsalz und dem Anlagerungsprodukt von 4 Mol Ethylenoxid an 1 Mol eines $C_9$-$C_{11}$-primären Alkohols im Gewichtsverhältnis 3:1,
10 ml des gemäss Beispiel 1 hergestellten Mischpolymerisates,
10 ml Natriumhydroxidlösung (30 %) und
75 ml Natronwasserglaslösung mit 26,3-.27,7 % Silikatgehalt,
enthält, imprägniert, worauf nach dem Klotzen eine Flottenaufnahme von 198 % (berechnet auf das Trockengewicht des Substrates) erhalten wird. Das imprägnierte Gewirke wird aufgerollt und 5 Stunden bei Raumtemperatur gelagert. Hiernach wird das Gewirke gespült und 20 Minuten bei Kochtemperatur mit einem nicht-ionogenen Waschmittel (0,5 g/l des Additionsproduktes von 9 Mol Ethylenoxid an 1 Mol Nonylphenol) in einem Flottenverhältnis von 1:40 nachgewaschen. Anschliessend wird das Substrat nochmals gespült und getrocknet.

Man erhält eine farbstarke und brillante rote Färbung, die sich besonders durch ein ruhiges Warenbild auszeichnet.

Aehnlich gute Ergebnisse werden erhalten, wenn anstelle des Mischpolymerisates gemäss Beispiel 1 jeweils die gleiche Menge eines gemäss Beispiel 2 bis 14 hergestellten Mischpolymerisates verwendet wird.

Beispiel 16:

Ein rohes Baumwollgewirke mit einem Flächengewicht von 165 g/m² wird auf einem Foulard bei 25° C mit einer Flotte, die im Liter
50 g des Farbstoffes der Formel (11)
2,5 g eines Netzmittels bestehend aus Pentadekan-1-sulfonsäure-Natriumsalz und dem Anlagerungsprodukt von 4 Mol Ethylenoxid an 1 Mol eines $C_9$-$C_{11}$-primären Alkohols im Gewichtsverhältnis 3:1,
4 ml eines gemäss Beispiel 1 hergestellten Mischpolymerisates,
10 ml Natriumhydroxidlösung (30 %) und
75 ml Natronwasserglaslösung mit 26,3-27,7 % Silikatgehalt,
enthält, imprägniert, worauf bei einer Tauchzeit von 0,86 Sekunden und einem Walzendruck von 1,5 bar/cm² eine Flottenaufnahme von 130 % (berechnet auf das Trockengewicht des Substrates) erzielt wird. Hiernach wird das Gewirke aufgerollt, in eine Plastikfolie eingewickelt und 3 Minuten mitMikrowellen bei einer Frequenz von 2450 MHz behandelt. Alsdann wird das Gewirke gespült und 20 Minuten bei Kochtemperatur mit einem nichtionogenen Waschmittel (0,5 g/l des Additionsproduktes von 9 Mol Ethylenoxid an 1 Mol Nonylphenol) in einem Flottenverhältnis von 1:40 nachgewaschen. Anschliessend wird das Substrat nochmals gespült und getrocknet.

Man erhält eine farbstarke und brillante rote Färbung von guter Egalität.

Beispiel 17:

Man stellt eine Druckfarbe her, die in 1 Liter Wasser folgende Zusätze enthält:
50 g eines Farbstoffes der Formel

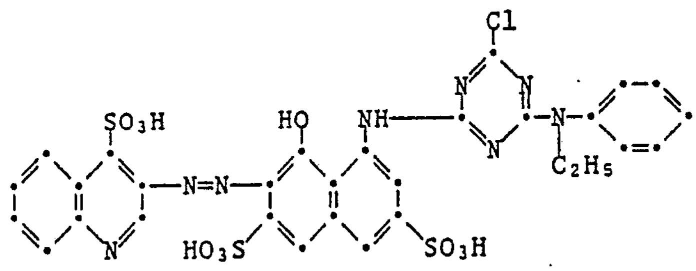

(12)

100 g einer wässerigen Mischung, die 7,5 g eines Anlagerungsproduktes von 2 Mol Ethylenoxid an 1 Mol Cetylalkohol und 0,025 g Natriumlaurylsulfat enthält,
4 g des gemäss Beispiel 1 hergestellten Mischpolymerisates,
10 g des Natriumsalzes von m-Nitrobenzolsulfonsäure,
60 g einer 25%igen wässerigen Natriumcarbonatlösung und
100 g Harnstoff
enthält.

Hierauf wird die Druckfarbe in einem geschlossenen System über ein Schaumaggregat verschäumt. Der Verschäumungsgrad beträgt 192 g/l. Die Schaumhalbwertzeit ist 20 Stunden. Dieser Schaum wird durch Rohrleitungen über eine Siebschablone auf ein Baumwollgewebe mit einem Druck von 0,40 bar gepresst. Alsdann wird das bedruckte Gewebe 8 Minuten bei 102° C gedämpft, anschliessend wie üblich geseift und getrocknet.

Man erhält einen farbstarken, egalen, und scharfstehenden roten Druck mit einem ausgezeichneten Warengriff und guten Gebrauchsechtheiten.

## Ansprüche

1. Mischpolymerisate, welche aus .
(1) 20 bis 50 Gew.% eines gegebenenfalls N-substituierten Acrylamid oder Methacrylamid und
(2) 50 bis 80 Gew.% eines N-vinylsubstituierten Amids oder eines Vinylesters jeweils einer gesättigten aliphatischen Monocarbonsäure,
wobei sich die Summe von (1) und (2) zu 100 % ergänzt, erhältlich sind.

2. Mischpolymerisate gemäss Anspruch 1, dadurch gekennzeichnet, dass das Monomer (1) Acrylamid oder Methacrylamid ist.

3. Mischpolymerisate gemäss einem der Ansprüche 1 und 2, dadurch gekennzeichnet, dass das Monomer (2) N-Vinylacetamid, N-Methyl-N-vinylacetamid oder N-Ethyl-N-vinylacetamid ist.

4. Mischpolymerisate gemäss einem der Ansprüche 1 bis 3, dadurch gekennzeichnet, dass das Monomerengemisch aus 25 bis 48 Gew.% der Acrylamidverbindung (1) und 52 bis 75 Gew.% der Vinylverbindung (2) besteht.

5. Mischpolymerisate gemäss einem der Ansprüche 1 bis 4, dadurch gekennzeichnet, dass sie 35 bis 48 Gew.% Acrylamid und 52 bis 65 Gew.% N-Methyl-N-vinylacetamid, wobei die Summe der umgesetzten Komponenten 100 % beträgt, enthalten.

6. Verfahren zum Färben von Textilmaterialien, die ganz oder teilweise aus Cellulosefasern bestehen mit substantiven Farbstoffen oder Reaktivfarbstoffen, dadurch gekennzeichnet, dass man die Cellulosematerialien mit einer wässerigen Färbeflotte imprägniert, die ausser dem Farbstoff ein Mischpolymerisat, welches aus
(1) 20 bis 50 Gew.% eines gegebenenfalls N-substituierten Acrylamid oder Methacrylamid und
(2) 50 bis 80 Gew.% eines N-vinylsubstituierten Amids oder eines Vinylesters jeweils einer gesättigten aliphatischen Monocarbonsäure,
wobei sich die Summe von (1) und (2) zu 100 % ergänzt, erhältlich ist, enthält und anschliessend die Fixierung der Farbstoffe durch Hitzeeinwirkung oder nach der Kaltverweilmethode durchführt.

7. Verfahren gemäss Anspruch 6, dadurch gekennzeichnet, dass die Färbeflotte zusätzlich zu dem Mischpolymerisat ein alkalibeständiges Netzmittel enthält.

8. Verfahren gemäss einem der Ansprüche 6 und 7, dadurch gekennzeichnet, dass die Färbeflotte das Mischpolymerisat in einer Menge von 2 bis 40 g, vorzugsweise 5 bis 20 g pro Liter in Form von 3 bis 10%igen wässerigen Lösungen enthält.

9. Verfahren gemäss einem der Ansprüche 6 bis 8, dadurch gekennzeichnet, dass man mit Reaktivfarbstoffen färbt.

10. Verfahren gemäss einem der Ansprüche 6 bis 9, dadurch gekennzeichnet, dass die Fixierung der Farbstoffe mittels Mikrowellen erfolgt.

11. Verfahren gemäss einem der Ansprüche 6 bis 9, dadurch gekennzeichnet, dass die Fixierung der Farbstoffe nach dem Thermosol-Verfahren erfolgt.

12. Verfahren gemäss einem der Ansprüche 6 bis 9, dadurch gekennzeichnet, dass die Fixierung der Farbstoffe durch Dämpfen erfolgt.

13. Verfahren gemäss einem der Ansprüche 6 bis 9, dadurch gekennzeichnet, dass man die Fixierung der Farbstoffe nach der Kaltverweil-Methode durchführt.